# EUROPEAN PATENT APPLICATION

(11) **EP 2 554 267 A1**
(43) Date of publication of application: **06.02.2013**
(21) Application number: 11762571.5
(22) Date of filing: 15.03.2011
(51) Int. Cl.: B01J 37/18, C10G 2/00

(54) **PREPARATION METHOD FOR ACTIVATED CATALYST FOR FISCHER-TROPSCH SYNTHESIS, PREPARATION METHOD FOR CATALYST SLURRY, AND METHOD FOR SUPPLYING CATALYST SLURRY TO FISCHER-TROPSCH SYNTHESIS REACTOR**

(30) Priority: 30.03.2010 JP 2010079358
(71) Applicant: Japan Oil, Gas and Metals National Corporation, Tokyo 105-0001 (JP); INPEX Corporation, Tokyo 107-6332 (JP); JX Nippon Oil & Energy Corporation, Chiyoda-ku Tokyo 100-8162 (JP); Japan Petroleum Exploration Co., Ltd., Tokyo 100-0005 (JP); Cosmo Oil Co., Ltd., Tokyo 105-8528 (JP); Nippon Steel Engineering Co., Ltd, Tokyo 141-8604 (JP)
(72) Inventor: TASAKA, Kazuhiko, Yokohama-shi Kanagawa 231-0815 (JP)
(74) Representative: Vossius & Partner
(86) International application number: PCT/JP2011/056068
(87) International publication number: WO 2011/122331

(57) **Abstract**

A process for producing an activated catalyst for a Fischer-Tropsch synthesis reaction that includes a step of subjecting a Fischer-Tropsch synthesis reaction catalyst prepared by loading an active metal on an inorganic support to a reduction treatment by a gas containing hydrogen gas. This reduction treatment is performed in any reactor among a reactor (10) that conducts a hydrodesulfurization of a hydrocarbon feedstock used for producing the synthesis gas that functions as the feedstock for the Fischer-Tropsch synthesis reaction, a reactor (30) that conducts the Fischer-Tropsch synthesis reaction, and reactors (50, 52, 54) that conduct hydroprocessing of a synthetic oil that has been synthesized by the Fischer-Tropsch synthesis reaction.

## Description

### TECHNICAL FIELD

The present invention relates to a process for producing an activated catalyst used in a Fischer-Tropsch synthesis reaction, a process for producing a catalyst slurry containing the activated catalyst, and a process for supplying the catalyst slurry produced by the above process to a Fischer-Tropsch synthesis reactor.
Priority is claimed on Japanese Patent Application No. 2010-79358, filed March 30, 2010, the content of which is incorporated herein by reference.

### BACKGROUND ART

As a process for producing hydrocarbon compounds that can be used as feed stocks for liquid fuel products such as naphtha (raw gasoline), kerosene and gas oil, a process that employs a Fischer-Tropsch synthesis reaction (hereinafter also abbreviated as "FT synthesis reaction") which uses a synthesis gas containing mainly carbon monoxide gas (CO) and hydrogen gas (H₂) as a feedstock is already known.
In terms of the synthesis reaction system used for synthesizing the hydrocarbon compounds via the FT synthesis reaction, a bubble column slurry bed FT synthesis reaction system in which the FT synthesis reaction is conducted by blowing the synthesis gas through a slurry prepared by suspending solid catalyst particles within liquid hydrocarbons has already been disclosed (see Patent Document 1).
In systems such as those described in Patent Document 1, in which the production of hydrocarbon compounds by the FT synthesis reaction employs a process in which the catalyst is suspended within liquid hydrocarbons to prepare a catalyst slurry, and this slurry is then brought into contact with a synthesis gas that functions as the feedstock, the production process usually includes a step wherein, at the time of startup of the FT synthesis reactor, the catalyst is suspended in the liquid hydrocarbons to prepare the slurry, which is then introduced into the reactor.

On the other hand, an example of a known technique that utilizes the FT synthesis reaction is the so-called GTL (Gas to Liquids) technique, in which hydrocarbon compounds are synthesized by the FT synthesis reaction from a synthesis gas that has been produced, for example, from a natural gas, and liquid fuels are then produced from these hydrocarbon compounds. A facility for performing this type of GTL technique usually includes not only the FT synthesis reactor, but also other reactors that handle heated hydrogen gas and hydrocarbon compounds, such as a hydrodesulfurization reactor for removing sulfur compounds from the natural gas, and reactors for hydroprocessing the hydrocarbon compounds synthesized by the FT synthesis reaction.

As the catalyst used in the FT synthesis reaction, catalysts in which an active metal such as cobalt, iron, nickel or ruthenium is supported on an inorganic oxide support are well known. These catalysts are generally prepared by loading the active metal component on the support and calcining the metal-loaded support, and are subjected to the FT synthesis reaction in an activated state brought by a reduction treatment of the catalysts with a reducing agent such as hydrogen gas. This reduction treatment is frequently conducted at a facility at a different location from the FT synthesis reaction facility, typically at a catalyst production plant. In such cases, during the process of discharging the catalyst that has been activated by the reduction treatment from the reduction treatment facility, transporting the catalyst to the FT synthesis reaction facility, and then introducing the catalyst into the FT synthesis reaction facility, exposure of the activated catalyst to the atmosphere tends to cause deactivation of the catalyst. Examples of known methods of preventing this type of catalyst deactivation include methods in which, prior to handling operations such as transportation, the surface of the activated catalyst is coated with a medium such as wax while being converted to a flake-like form, under conditions where the catalyst makes no contact with the atmosphere, thereby producing a stabilized state in which contact with the atmosphere is blocked (see Patent Document 2).

[Patent Document 1] United States Patent Application No. 2007-0014703
[Patent Document 2] United States Patent No. 6,979,663

### DISCLOSURE OF INVENTION

### Problems to be Solved by the Invention

However, in order to use the type of coating treatment described above to stabilize the catalyst that has been activated by reduction treatment, a special facility for enabling the activated catalyst to be coated and converted to a flake-like form without making contact with the atmosphere must be provided, and the production process for the activated catalyst also becomes significantly more complex.

The present invention has been developed in light of the above circumstances, and has an object of providing a process for producing an activated catalyst for an FT synthesis reaction by a simplified process so that, in a liquid fuel production system used for executing a GTL technique that includes a synthesis device for synthesizing hydrocarbon compounds by the FT synthesis reaction, a special facility for performing a reduction treatment of the catalyst for the FT synthesis reaction, a step of stabilizing the activated catalyst by performing a coating treatment, and a facility for performing such a coating treatment are not required. Further, other objects of the present invention are to provide a process for producing a catalyst slurry by suspending the activated catalyst in a liquid hydrocarbon, in which deactivation of the above-mentioned activated catalyst can be prevented without performing a stabilization treatment, and to provide a process for supplying the above-mentioned catalyst slurry to an FT synthesis reactor that uses the catalyst slurry.

### Means for Solving the Problem

A process for producing an activated catalyst for a Fischer-Tropsch synthesis reaction according to the present invention includes a step of subjecting a Fischer-Tropsch synthesis reaction catalyst prepared by loading an active metal on an inorganic support to a reduction treatment by a gas containing hydrogen gas. This reduction treatment is performed in any reactor among a reactor that conducts a hydrodesulfurization of a hydrocarbon feedstock used for producing the synthesis gas that functions as the feedstock for the Fischer-Tropsch synthesis reaction, a reactor that conducts a Fischer-Tropsch synthesis reaction, and a reactor that conducts a hydroprocessing of a synthetic oil that has been synthesized by the Fischer-Tropsch synthesis reaction.

In the process for producing an activated catalyst for a Fischer-Tropsch synthesis reaction according to the present invention, the activated catalyst for a Fischer-Tropsch synthesis reaction may be used in a slurry bed reactor.
In those cases where the activated catalyst is used in a slurry bed reactor, the activated catalyst is mixed with a liquid hydrocarbon to form a slurry, which can be easily transferred into the reactor for performing the Fischer-Tropsch synthesis reaction, and can be used, as is, for executing the Fischer-Tropsch synthesis reaction.

A process for producing a catalyst slurry for a Fischer-Tropsch synthesis reaction includes:
an activation step of activating a catalyst for a Fischer-Tropsch synthesis reaction prepared by loading an active metal on an inorganic support, by using a gas that contains hydrogen gas in any reactor among a reactor that conducts a hydrodesulfurization of a hydrocarbon feedstock used for producing the synthesis gas that functions as the feedstock for the Fischer-Tropsch synthesis reaction, a reactor that conducts the Fischer-Tropsch synthesis reaction, and a reactor that conducts a hydroprocessing of a synthetic oil that has been synthesized by the Fischer-Tropsch synthesis reaction, and
a catalyst slurry preparation step of supplying a liquid hydrocarbon to the reactor containing the activated catalyst to prepare a slurry.

A process for supplying a catalyst slurry to a Fischer-Tropsch synthesis reactor according to the present invention includes:
an activation step of activating a catalyst for a Fischer-Tropsch synthesis reaction prepared by loading an active metal on an inorganic support, by using a gas that contains hydrogen gas in either reactor among a reactor that conducts a hydrodesulfurization of a hydrocarbon feedstock used for producing the synthesis gas that functions as the feedstock for the Fischer-Tropsch synthesis reaction, and a reactor that conducts a hydroprocessing of a synthetic oil that has been synthesized by the Fischer-Tropsch synthesis reaction,
a catalyst slurry preparation step of supplying a liquid hydrocarbon to the reactor containing the activated catalyst to prepare a slurry, and
a transfer step of transferring the catalyst slurry through a line to a reactor used for conducting the Fischer-Tropsch synthesis reaction.

### Effect of the Invention

In the process for producing an activated catalyst for a Fischer-Tropsch synthesis reaction according to the present invention, the activated catalyst for an FT synthesis reaction is produced by a simplified process so that, in a hydrocarbon production system that uses the FT synthesis reaction, a special facility for performing a reduction treatment of the catalyst, a step of stabilizing the activated catalyst by performing a coating treatment, and a special facility for performing such a coating treatment are not required.
In the process for producing a catalyst slurry for a Fischer-Tropsch synthesis reaction and the process for supplying a catalyst slurry to a Fischer-Tropsch synthesis reactor according to the present invention, special facilities are not required, and the catalyst slurry can be produced with ease and then introduced into the FT synthesis reactor in a simple manner while preventing deactivation resulting from the activated catalyst making contact with the atmosphere.

### BRIEF DESCRIPTION OF THE DRAWINGS

FIG 1 is a schematic diagram illustrating the overall configuration of a liquid fuel synthesis system according to an embodiment of the present invention, provided with a natural gas desulfurizer, an FT synthesis reactor and hydrocarbon compound hydroprocessing reactors.
FIG. 2 is a schematic diagram illustrating a processing unit used in one embodiment of the process for producing an activated catalyst for a Fischer-Tropsch synthesis reaction according to the present invention.

### BEST MODE FOR CARRYING OUT THE INVENTION

### (Liquid fuel synthesis system)

First is a description of one example of a liquid fuel synthesis system that uses a GTL technique, the system including a Fischer-Tropsch synthesis reactor (hereinafter also referred to as "the FT synthesis reactor") in which an activated catalyst for a Fischer-Tropsch synthesis reaction (hereinafter also referred to as "the activated FT synthesis catalyst") produced according to the present invention is used, a desulfurizer for the natural gas, and hydrocarbon compound hydrotreating reactors that are used for producing the activated FT synthesis catalyst and for producing a catalyst slurry for the Fischer-Tropsch synthesis reaction (hereinafter also referred to as simply "the catalyst slurry").

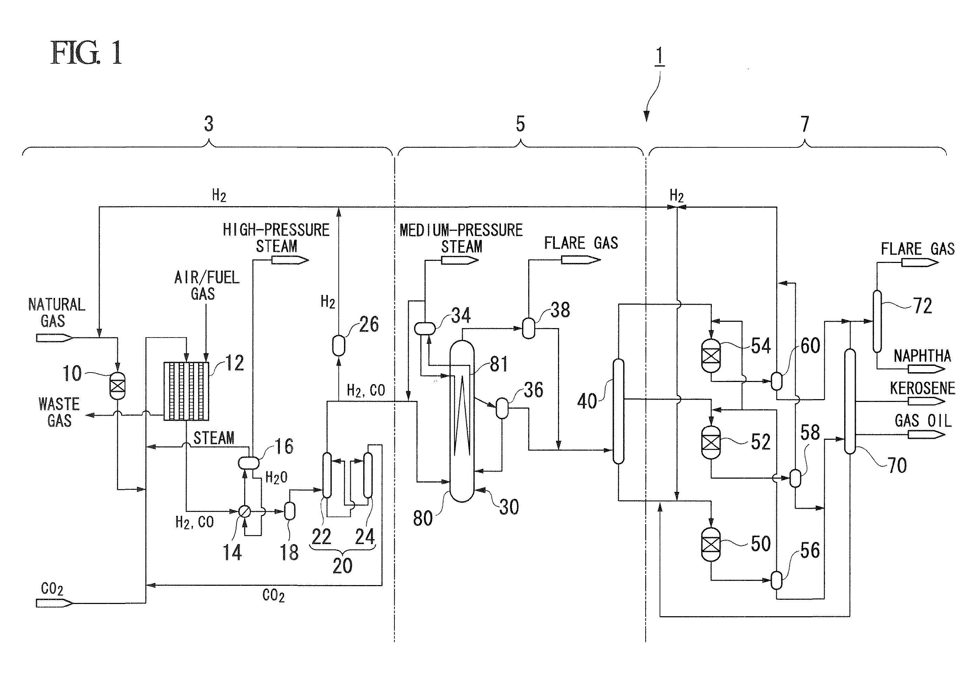

FIG. 1 illustrates one example of the liquid fuel synthesis system.
This liquid fuel synthesis system 1 includes a synthesis gas production unit 3, an FT synthesis unit 5, and an upgrading unit 7. In the synthesis gas production unit 3, a natural gas that functions as a hydrocarbon feedstock is reformed to produce a synthesis gas containing carbon monoxide gas and hydrogen gas. In the FT synthesis unit 5, hydrocarbon compounds are synthesized by an FT synthesis reaction from the synthesis gas produced by the synthesis gas production unit 3. In the upgrading unit 7, the hydrocarbon compounds synthesized in the FT synthesis unit are hydroprocessed and fractionally distilled to produce liquid fuel products and the like (such as naphtha, kerosene, gas oil and wax).

The structural elements of each of these units is described below.
The synthesis gas production unit 3 is composed mainly of a desulfurizer 10, a reformer 12, a waste heat boiler 14, gas-liquid separators 16 and 18, a CO₂ removal unit 20, and a hydrogen separator 26.
The desulfurizer 10 includes a hydrodesulfurization reactor or the like, and removes sulfur compounds from the natural gas that functions as the feedstock. The hydrodesulfurization reactor is filled with a conventional hydrodesulfurization catalyst, and sulfur compounds contained within the natural gas are hydrogenated and converted to hydrogen sulfide in the presence of hydrogen gas. An adsorption desulfurization device filled with a desulfurization material such as zinc oxide that adsorbs hydrogen sulfide is provided downstream from the hydrodesulfurization reactor and removes the hydrogen sulfide contained within the natural gas.
This hydrodesulfurization reactor represents a preferred example of the "reactor that conducts a hydrodesulfurization of a hydrocarbon feedstock used for producing the synthesis gas that functions as the feedstock for the Fischer-Tropsch synthesis reaction" according to the present invention.

In the reformer 12, the natural gas supplied from the desulfurizer 10 is reformed to produce a synthesis gas containing carbon monoxide gas (CO) and hydrogen gas (H₂) as the main components.

In the waste heat boiler 14, waste heat from the high-temperature synthesis gas produced in the reformer 12 is recovered to generate a high-pressure steam.

In the gas-liquid separator 16, the water that has been heated by heat exchange with the high-temperature synthesis gas in the waste heat boiler 14 is separated into a gas (high-pressure steam) and liquid water.

In the gas-liquid separator 18, a condensed component is removed from the synthesis gas that has been cooled in the waste heat boiler 14, while the gas component is supplied to the CO₂ removal unit 20.

The CO₂ removal unit 20 has an absorption tower 22 that uses an absorbent to remove carbon dioxide gas from the synthesis gas supplied from the gas-liquid separator 18, and a regeneration tower 24 that releases the carbon dioxide gas absorbed by the absorbent, thereby regenerating the absorbent.

In the hydrogen separator 26, a portion of the hydrogen gas is separated from the synthesis gas from which the carbon dioxide gas has already been separated by the CO₂ removal unit 20.

The FT synthesis unit 5 includes mainly a bubble column FT synthesis reactor 30, a gas-liquid separator 34, a separator 36, a gas-liquid separator 38, and a first fractionator 40.

The FT synthesis reactor 30 is a reactor that synthesizes hydrocarbon compounds from the synthesis gas by the FT synthesis reaction, and is composed mainly of a reactor main unit 80 and a cooling tube 81. The reactor main unit 80 is a substantially cylindrical metal vessel, the inside of which contains a catalyst slurry prepared by suspending solid particles of an activated FT synthesis catalyst within liquid hydrocarbons (the FT synthesis reaction product). The synthesis gas containing hydrogen gas and carbon monoxide gas as the main components is injected into the catalyst slurry from a position in the bottom section of the reactor main unit 80. This synthesis gas that has been injected into the catalyst slurry forms bubbles that rise up through the slurry along the vertical direction of the reactor main unit 80 from bottom to top. During this process, the synthesis gas dissolves in the liquid hydrocarbons and makes contact with the catalyst particles, causing the synthesis of hydrocarbon compounds (the FT synthesis reaction) to proceed. Further, as the synthesis gas rises up through the inside of the reactor main unit 80 in the form of gas bubbles, an upward flow (air lift) is generated within the catalyst slurry inside the reactor main unit 80. As a result, a circulating flow is generated within the catalyst slurry inside the reactor main unit 80. Any unreacted synthesis gas reaching the top of the reactor main unit 80 is discharged from the top of the reactor main unit 80 and supplied to the gas-liquid separator 38.
Needless to say, the FT synthesis reactor 30 is the "reactor used for conducting the Fischer-Tropsch synthesis reaction" according to the present invention.

In the gas-liquid separator 34, the water that has been heated by passage through the cooling tube 81 provided inside the FT synthesis reactor 30 is separated into a steam (medium-pressure steam) and liquid water.

The separator 36 is connected to the middle section of the FT synthesis reactor 30, and separates the catalyst slurry into catalyst particles and a liquid hydrocarbon product.

The gas-liquid separator 38 is connected to the FT synthesis reactor 30, and cools the unreacted synthesis gas and those light hydrocarbons generated by the FT synthesis reaction that exist as gases under the conditions inside the reactor main unit 80, thus performing a gas-liquid separation that yields a liquid hydrocarbon fraction and a gas fraction containing the unreacted synthesis gas and gaseous hydrocarbons of C₄ or less.

In the first fractionator 40, a mixture of the liquid hydrocarbons supplied from the FT synthesis reactor 30 via the separator 36 and the liquid hydrocarbons supplied from the FT synthesis reactor 30 via the gas-liquid separator 38 is subjected to fractional distillation according to boiling points.

The upgrading unit 7 includes mainly a wax fraction hydrocracking reactor 50, a middle distillate hydrotreating reactor 52, a naphtha fraction hydrotreating reactor 54, gas-liquid separators 56, 58 and 60, a second fractionator 70, and a naphtha stabilizer 72.

The wax fraction hydrocracking reactor 50 is connected to the bottom of the first fractionator 40. The middle distillate hydrotreating reactor 52 is connected to a middle section of the first fractionator 40. The naphtha fraction hydrotreating reactor 54 is connected to the top of the first fractionator 40. The gas-liquid separators 56, 58 and 60 are provided in corresponding positions downstream from the reactors 50, 52 and 54 respectively. In the second fractionator 70, the liquid hydrocarbons supplied from the gas-liquid separators 56 and 58 are fractionally distilled according to their boiling points. In the naphtha stabilizer 72, the liquid hydrocarbon compounds contained within the naphtha fraction supplied from the gas-liquid separator 60 and the second fractionator 70 are fractionally distilled, the resulting light hydrocarbon compounds of C₄ or less are discharged as a flare gas, while the hydrocarbon compounds having a carbon number of 5 or greater are separated and recovered as a naphtha product.

The wax fraction hydrocracking reactor 50 is a reactor used mainly for hydrocracking (molecular weight reduction), in the presence of hydrogen gas, of the wax fraction supplied from the bottom of the first fractionator 40. The reactor is generally filled with a conventional hydrocracking catalyst in which a metal having hydrogenation activity is supported on a support containing a solid acid as a fixed bed. Specific examples of the hydrocracking catalyst include catalysts prepared by loading a metal belonging to group 8 to 10 of the periodic table, typified by platinum and/or palladium, on a support containing a zeolite typified by USY zeolite and a composite metal oxide such as silica-alumina, silica-zirconia or alumina-boria.

The middle distillate hydrotreating reactor 52 is a reactor that is used mainly for hydrotreating (removing the olefins and oxygen-containing compounds such as alcohols that represent by-products of the FT synthesis reaction) and hydroisomerization (converting the normal paraffins that represents a main component of the middle distillate to isoparaffins), in the presence of hydrogen gas, the middle distillate supplied from the middle section of the first fractionator 40. The reactor is generally filled with a conventional hydrotreating catalyst in which a metal having hydrogenation activity is supported on a support containing a solid acid. Specific examples of the hydrotreating catalyst include catalysts prepared by loading a metal belonging to group 8 to 10 of the periodic table, typified by platinum and/or palladium, on a support containing a composite metal oxide such as silica-alumina, silica-zirconia or alumina-boria.

The naphtha fraction hydrotreating reactor 54 is a reactor that is used mainly for hydrotreating (removing the olefins and oxygen-containing compounds such as alcohols that represent by-products of the FT synthesis reaction), in the presence of hydrogen gas, the naphtha fraction supplied from the top of the first fractionator 40. The reactor is generally filled with a conventional hydrotreating catalyst in which a metal having hydrogenation activity is supported on a support which may or may not contain a solid acid. Specific examples of the hydrotreating catalyst include the same catalysts as those used within the above-mentioned middle distillate hydrotreating reactor 52.

In the present invention, a "reactor that conducts a hydroprocessing" refers to a reactor that conducts some form of refinement of hydrocarbon compounds using hydrogen gas, including the above-mentioned hydrocracking, hydrotreating and hydroisomerization processes. The wax fraction hydrocracking reactor 50, the middle distillate hydrotreating reactor 52, and the naphtha fraction hydrotreating reactor 54 described above are all ideal examples of the "reactor that conducts a hydroprocessing of a synthetic oil that has been synthesized by the Fischer-Tropsch synthesis reaction" according to the present invention.
The hydrodesulfurization reactor that constitutes the desulfurizer 10 for a natural gas, and each of the reactors used for conducting hydroprocessing are typically filled with their own respective catalysts, and are used for conducting their respective reactions. However, when operation of the liquid fuel synthesis system 1 is halted, and for example, the catalyst contained within each of the reactors is discharged for the purpose of catalyst replacement or the like, the process of the present invention may be applied to any of these reactors.

### (Processing unit for producing activated FT synthesis catalyst)

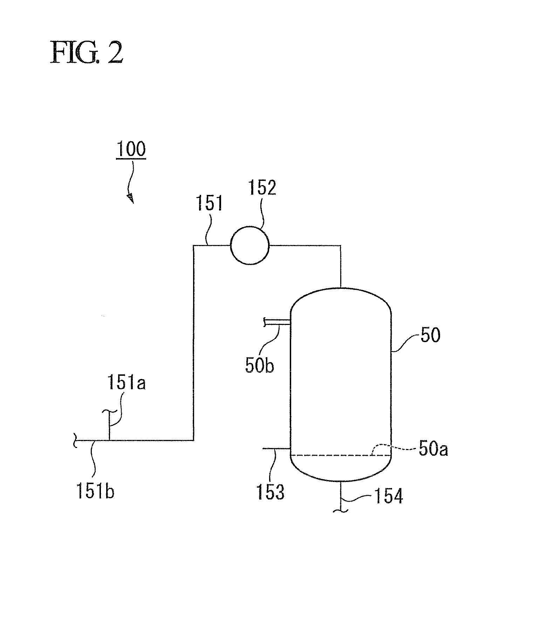

FIG. 2 describes a processing unit used for producing an activated FT synthesis catalyst and producing catalyst slurry, within the process for producing an activated FT synthesis catalyst according to the present embodiment. This processing unit 100 is described below in detail using the wax fraction hydrocracking reactor 50 that constitutes part of the liquid fuel synthesis system 1 as an example.

As described above, the wax fraction hydrocracking reactor 50 is used primarily as a reactor for hydrocracking the wax fraction, but because the reactor can be supplied with heated hydrogen gas, and can also be supplied with liquid hydrocarbons and discharge liquid hydrocarbons, the reactor can be used favorably as a processing device for producing the activated FT synthesis catalyst and the catalyst slurry during those periods when operation of the reactor is halted and the hydrocracking catalyst contained within the reactor is removed.

The processing unit 100 includes the wax fraction hydrocracking reactor 50, a supply line 151 connected to the wax fraction hydrocracking reactor 50, and a heater 152 fitted within the supply line 151. A mesh-like shelf 50a for supporting the catalyst is installed inside the wax fraction hydrocracking reactor 50. The mesh size of the mesh-like shelf 50a is such that the catalyst particles are unable to pass therethrough. Further, a nozzle 50b is provided in the side surface of the wax fraction hydrocracking reactor 50 for the purpose of introducing the catalyst used in the FT synthesis reaction prior to performing the activation treatment (hereinafter also referred to as simply "the FT synthesis catalyst"). The supply line 151 is used for introducing hydrogen gas and liquid hydrocarbons into the wax fraction hydrocracking reactor 50. Accordingly, a hydrogen inlet 151a and a liquid hydrocarbon inlet 151b are connected to the supply line 151. As the heater 152, a heat exchanger or furnace or the like may be used. Further, a discharge line 153 for discharging the catalyst slurry, which is described in further detail below, is connected to the wax fraction hydrocracking reactor 50 at a position immediately above the mesh-like shelf 50a.

In the processing unit 100, hydrogen gas is supplied to the supply line 151 from the hydrogen inlet 151a, the hydrogen gas is heated by the heater 152, and the heated hydrogen gas is then supplied to the wax fraction hydrocracking reactor 50. Further, liquid hydrocarbons are supplied to the supply line 151 from the liquid hydrocarbon inlet 151 b, and the liquid hydrocarbons are heated by the heater 152 where necessary and then supplied to the wax fraction hydrocracking reactor 50.
By subjecting the FT synthesis catalyst to a reduction treatment using the heated hydrogen gas, the activated FT synthesis catalyst is produced.

### (Process for producing activated FT synthesis catalyst)

A description of a process for producing an activated FT synthesis catalyst using the processing unit 100 of the embodiment described above is presented below.

In the process for producing the activated FT synthesis catalyst according to the present invention, a conventional supported FT synthesis catalyst containing an active metal loaded on an inorganic support is used. As the inorganic support, a porous oxide such as silica, alumina, titania, magnesia or zirconia may be used, and of these, silica or alumina is preferable, and silica is particularly desirable. Examples of the active metal include cobalt, ruthenium, iron and nickel, and of these, cobalt and/or ruthenium is preferable, and cobalt is particularly desirable. The amount of the active metal loaded on the support, relative to the mass of the support, is preferably within a range from 3 to 50% by mass, and more preferably 10 to 40% by mass. If the amount of loaded active metal is less than 3% by mass, then the activity tends to be inadequate, whereas if the amount exceeds 50% by mass, then aggregation of the active metal tends to result in a decrease in activity. Further, in addition to the active metal described above, other components may also be loaded on the FT synthesis catalyst, either for the purpose of increasing the activity, or for the purpose of controlling the carbon number and carbon number distribution of the produced hydrocarbons. Examples of these other components include compounds containing metal elements such as zirconium, titanium, hafnium, sodium, lithium and magnesium. In those cases where the FT synthesis catalyst is subjected to an FT synthesis reaction inside a slurry bed reactor, the average particle size of the catalyst is preferably within a range from 40 to 150 µm in order to facilitate flow of the catalyst inside the reactor in the form of a slurry in which the catalyst is suspended in liquid hydrocarbons.

The active metal may be loaded on the support using a conventional method. Examples of the compound containing the active metal used in the loading process include mineral acid salts such as nitrates, hydrochlorides and sulfates of the above-mentioned active metal elements, salts of the active metals with organic acids such as formic acid, acetic acid and propionic acid, and complex compounds of the active metals such as acetylacetonate complexes.
Although there are no particular limitations on the loading method used, impregnation methods typified by the incipient wetness method, which use a solution of a compound containing an above-mentioned active metal, can be used particularly favorably.
The support having the compound containing the active metal element loaded thereon may then be dried using a conventional method, and is preferably calcined using a conventional method in an open-air atmosphere. Although there are no particular limitations on the calcination temperature, the temperature is generally approximately 300 to 600°C.
This calcination process converts the compound containing the active metal element on the support to a metal oxide.
The FT synthesis catalyst used in the process for producing an activated FT synthesis catalyst of the present invention is preferably a catalyst in which the active metal atoms exist in the form of an oxide.

An example of the method used for introducing the FT synthesis catalyst into the wax fraction hydrocracking reactor 50 involves introducing the FT synthesis catalyst onto the mesh-like shelf 50a provided inside the wax fraction hydrocracking reactor 50 through the nozzle 50b provided in the wax fraction hydrocracking reactor 50.

The reduction treatment is a treatment for reducing and activating the active metal within the FT synthesis catalyst contained inside the wax fraction hydrocracking reactor 50 using a reducing gas. Examples of the reducing gas include gases containing hydrogen gas, such as hydrogen gas and mixed gases of hydrogen gas and an inert gas such as nitrogen gas, and carbon monoxide gas, although gases containing hydrogen gas are preferable, and hydrogen gas is particularly desirable.
Although there are no particular limitations on the temperature during the reduction treatment (the reduction temperature), a temperature of 200 to 550°C is generally preferred. If the reduction temperature is lower than 200°C, then the active metal atoms tend to undergo insufficient reduction, meaning the desired catalytic activity tends not be fully realized, whereas if the temperature exceeds 550°C, then problems such as aggregation of the active metal tend to cause a deterioration in the catalytic activity.
There are no particular limitations on the pressure during the reduction treatment although a pressure of 0.1 to 10 MPa is generally preferred. If the pressure is less than 0.1 MPa, then the active metal atoms tend to undergo insufficient reduction, meaning the desired catalytic activity tends not be fully realized, whereas if the pressure exceeds 10 MPa, then the need to increase the pressure resistance of the various devices tends to result in increased equipment costs.
Although there are no particular limitations on the time of the reduction treatment, a time of 0.5 to 50 hours is generally preferred. If the reduction time is less than 0.5 hours, then the active metal atoms tend to undergo insufficient reduction, meaning the desired catalytic activity tends not be fully realized, whereas if the time exceeds 50 hours, then problems such as aggregation of the active metal tend to cause a deterioration in the catalytic activity, and the efficiency also tends to deteriorate.
Following completion of the reduction treatment, supply of the reducing gas such as hydrogen gas is halted, completing preparation of the activated FT synthesis catalyst.

### (Process for producing catalyst slurry)

A process for producing a catalyst slurry using the processing unit 100 described in the above embodiment is described below.
If required, the activated FT synthesis catalyst produced using the above-mentioned process for producing an activated FT synthesis catalyst may be cooled to a predetermined temperature. Then, with the catalyst still contained inside the wax fraction hydrocracking reactor 50, and therefore not in contact with the atmosphere, liquid hydrocarbons are supplied to the wax fraction hydrocracking reactor 50 from the liquid hydrocarbon inlet 151b via the supply line 151. The liquid hydrocarbons need be in a liquid state only when supplied to the wax fraction hydrocracking reactor 50, and may be solids or semisolids under normal temperature conditions, provided that they are heated and exist in a liquid state when introduced into the wax fraction hydrocracking reactor 50.

The liquid hydrocarbon may be a liquid paraffin or petroleum-based hydrocarbon solvent, but from the viewpoint of containing essentially no sulfur fraction and no aromatic hydrocarbons, and the viewpoint of enabling the hydrocarbons to be used without requiring external procurement, and because they are components that exist within the FT synthesis reaction system, liquid hydrocarbons produced by the FT synthesis reaction are preferable. These liquid hydrocarbons produced by the FT synthesis reaction may be the undistilled and unpurified raw oil obtained from the FT synthesis reaction step, the naphtha fraction, middle distillate or wax fraction or the like obtained by fractional distillation of the raw oil, the product obtained upon hydrotreating the naphtha fraction or middle distillate, the product obtained upon hydrocracking the wax fraction, the various fractions obtained by fractional distillation of these fractions, or mixtures of any of the above fractions.
The liquid hydrocarbons supplied from the liquid hydrocarbon inlet 151b via the supply line 151 are heated by the heater 152 as required, and are then supplied to the wax fraction hydrocracking reactor 50. Particularly in those cases where the liquid hydrocarbons being used are a wax fraction or include a wax fraction, heating is preferably performed to maintain fluidity. The temperature of the liquid hydrocarbons at the exit of the heater 152 varies depending on the composition of the liquid hydrocarbons, but is preferably within a range from room temperature to 300°C, and is more preferably from room temperature to 250°C. In those cases, the room temperature is about 5 to 35 °C. In those cases where the liquid hydrocarbons include a wax fraction, the temperature is preferably within a range from 80 to 300°C. During supply of the liquid hydrocarbons to the wax fraction hydrocracking reactor 50, a line 154 that is connected to the bottom of the wax fraction hydrocracking reactor 50 and is used for discharging outflow oil in a usual operation, and the discharge line 153 are both closed.

By supplying the liquid hydrocarbons to the wax fraction hydrocracking reactor 50, and mixing the liquid hydrocarbons with the activated FT synthesis catalyst contained therein, a catalyst slurry is formed.
The catalyst slurry produced using the above process for producing a catalyst slurry contains the activated FT synthesis catalyst and the liquid hydrocarbons, and can be subjected to the FT synthesis reaction conducted in the bubble column slurry bed FT synthesis reactor.
The amount of liquid hydrocarbons supplied to the wax fraction hydrocracking reactor 50 varies depending on the concentration of the activated FT synthesis catalyst contained within the catalyst slurry at the start of the FT synthesis reaction. In other words, the amount of supplied liquid hydrocarbons is adjusted so that the concentration of the activated FT synthesis catalyst within the catalyst slurry produced inside the wax fraction hydrocracking reactor 50 is not less than concentration of the activated FT synthesis catalyst within the catalyst slurry used at the start of the FT synthesis reaction.

### (Process for transferring the catalyst slurry to the FT synthesis reactor)

The catalyst slurry produced using the process for producing a catalyst slurry described above is transferred to the FT synthesis reactor 30.
In one example of the transfer process, the catalyst slurry contained inside the wax fraction hydrocracking reactor 50 may first be discharged externally, and then introduced into the FT synthesis reactor 30. However, in such a case, the catalyst slurry makes contact with the atmosphere, meaning there is a possibility that some deactivation of the activated FT synthesis catalyst may occur, and if the catalyst slurry has been heated, then there is a possibility that a decrease in the temperature of the slurry may cause a loss in fluidity. Accordingly, the process for transferring the catalyst slurry preferably includes transferring the slurry through a line and directly into the FT synthesis reactor 30, without requiring the slurry to be discharged externally. Discharge of the catalyst slurry from the wax fraction hydrocracking reactor 50 is preferably conducted from the discharge line 153. The discharge line 153 is connected to the FT synthesis reactor 30 (not shown in the drawings), and from the viewpoint of preventing contamination by residual catalyst within the line following transfer of the catalyst slurry, is preferably a dedicated line used only for transferring the catalyst slurry. Furthermore, following transfer of the slurry, the discharge line 153 is preferably flushed by passing liquid hydrocarbons through the line, thereby removing any residual activated catalyst.

During discharge of the catalyst slurry from the wax fraction hydrocracking reactor 50, an inert gas such as nitrogen may be supplied to the wax fraction hydrocracking reactor 50 from the line 154, which is connected to the bottom of the wax fraction hydrocracking reactor 50 and is used for discharging outflow oil in a usual operation. This forces the catalyst slurry out of the wax fraction hydrocracking reactor 50 under pressure, while simultaneously causing mixing of the catalyst slurry via the bubbling action of the inert gas, which enables the catalyst slurry to be transferred in a more uniform state.

In the FT synthesis reactor 30 containing the catalyst slurry that has been transferred from the wax fraction hydrocracking reactor 50, the startup operation for starting the FY synthesis reaction is initiated. Additional liquid hydrocarbons may be mixed with the catalyst slurry contained within the FT synthesis reactor 30 for the purposes of adjusting the catalyst concentration or the height of the slurry surface or the like.
Subsequently, a synthesis gas (H₂, CO) that has been pressurized to a predetermined pressure (for example, 1 to 5 MPaG) is supplied to the FT synthesis reactor 30, the temperature is adjusted to a predetermined temperature within a range from 170 to 300°C, and the FT synthesis reaction is started. In the FT synthesis reaction, liquid hydrocarbons are synthesized from the carbon monoxide gas and the hydrogen gas.

While the present embodiment using the wax fraction hydrocracking reactor 50 has been described above as an example, the middle distillate hydrotreating reactor 52 and the naphtha fraction hydrotreating reactor 54 are also fixed bed reactors similar to the wax fraction hydrocracking reactor 50, and are used for handling heated hydrogen gas and liquid hydrocarbons. Accordingly, by fitting these reactors with the same type of ancillary equipments as that described for the above-mentioned processing unit 100, these reactors can function as similar processing units. By using these processing units to perform the same operations as those described above, an activated FT synthesis catalyst and a catalyst slurry can be produced.

Furthermore, the hydrodesulfurization reactor that constitutes the natural gas desulfurizer 10 installed within the synthesis gas production unit 3 of the liquid fuel synthesis system 1 is also a fixed bed reactor, and in terms of being able to handle heated hydrogen gas and hydrocarbon compounds, is similar to the hydroprocessing reactors described above. Accordingly, by fitting the hydrodesulfurization reactor with the same type of ancillary equipment as that described for the above-mentioned processing unit 100, the hydrodesulfrization reactor can function as a similar processing unit. By using this processing unit to perform the same operations as those described above, an activated FT synthesis catalyst and a catalyst slurry can be produced.

Further, the FT synthesis reactor 30 usually contains the catalyst slurry described above, but that slurry may be discharged so that the reactor contains only the FT synthesis catalyst, which may then be subjected to a reduction treatment with heated hydrogen gas to produce an activated FT synthesis catalyst. Furthermore, by subsequently supplying liquid hydrocarbons to the reactor containing the above activated FT synthesis catalyst, a catalyst slurry is produced. Needless to say, in this case the catalyst slurry is not necessary to be transferred, and the FT synthesis reaction may simply be performed inside the reactor.

By employing the process for producing an activated FT synthesis catalyst according to the present invention, the activated FT synthesis catalyst is produced by a simplified process so that, in the liquid fuel synthesis system facility that employs the FT synthesis reaction, a special facility for performing the reduction treatment of the FT synthesis catalyst, a step of stabilizing the activated catalyst by performing a coating treatment, and a facility for performing such a coating treatment are not required. Further, by subsequently using the process for producing a catalyst slurry and the process for supplying a catalyst slurry to the FT synthesis reactor according to the present invention, a catalyst slurry can be produced while preventing deactivation resulting from the activated FT synthesis catalyst making contact with the atmosphere, and the thus produced catalyst slurry can then be introduced into the FT synthesis reactor in a simple manner. By employing these processes, the FT synthesis reaction can be conducted with similar levels of catalytic activity and product selectivity to those obtained when an activated FT synthesis catalyst that has been subjected to a stabilization treatment is used.

While the present invention has been described above on the basis of preferred embodiments, the present invention is in no way limited by the embodiments described above, and various modifications can be made without departing from the scope of the present invention.

### DESCRIPTION OF THE REFERENCE SIGNS

1: Liquid fuel synthesis system
3: Synthesis gas production unit
5: FT synthesis unit
7: Upgrading unit
10: Desulfurizer
30: FT synthesis reactor
50: Wax fraction hydrocracking reactor
52: Middle distillate hydrotreating reactor
54: Naphtha fraction hydrotreating reactor
100: Processing unit
151: Supply line
151a: Hydrogen inlet
151b: Liquid hydrocarbon inlet
152: Heater
153: Discharge line

## Claims

1. A process for producing an activated catalyst for a Fischer-Tropsch synthesis reaction, the process comprising:
subjecting a Fischer-Tropsch synthesis reaction catalyst prepared by loading an active metal on an inorganic support to a reduction treatment by a gas comprising hydrogen gas,
wherein the reduction treatment is performed in any reactor among a reactor that conducts a hydrodesulfurization of a hydrocarbon feedstock used for producing a synthesis gas that functions as a feedstock for a Fischer-Tropsch synthesis reaction, a reactor that conducts a Fischer-Tropsch synthesis reaction, and a reactor that conducts a hydroprocessing of a synthetic oil that has been synthesized by a Fischer-Tropsch synthesis reaction.

2. The process for producing an activated catalyst for a Fischer-Tropsch synthesis reaction according to claim 1, wherein the activated catalyst for a Fischer-Tropsch synthesis reaction is used in a slurry bed reactor.

3. A process for producing a catalyst slurry for a Fischer-Tropsch synthesis reaction, the process comprising:
activating a catalyst for a Fischer-Tropsch synthesis reaction prepared by loading an active metal on an inorganic support, by using a gas that comprises hydrogen gas in any reactor among a reactor that conducts a hydrodesulfurization of a hydrocarbon feedstock used for producing a synthesis gas that functions as a feedstock for a Fischer-Tropsch synthesis reaction, a reactor that conducts a Fischer-Tropsch synthesis reaction, and a reactor that conducts a hydroprocessing of a synthetic oil that has been synthesized by a Fischer-Tropsch synthesis reaction, and
preparing a catalyst slurry by supplying a liquid hydrocarbon to the any reactor containing an activated catalyst to prepare a slurry.

4. A process for supplying a catalyst slurry to a Fischer-Tropsch synthesis reactor, the process comprising:
an activation step of activating a catalyst for a Fischer-Tropsch synthesis reaction prepared by loading an active metal on an inorganic support, by using a gas that comprises hydrogen gas in either reactor among a reactor that conducts a hydrodesulfurization of a hydrocarbon feedstock used for producing a synthesis gas that functions as a feedstock for a Fischer-Tropsch synthesis reaction, and a reactor that conducts a hydroprocessing of a synthetic oil that has been synthesized by a Fischer-Tropsch synthesis reaction,
preparing a catalyst slurry by supplying a liquid hydrocarbon to the either reactor containing an activated catalyst, and
transferring the catalyst slurry through a line to a reactor used for conducting a Fischer-Tropsch synthesis reaction.
